# EUROPEAN PATENT APPLICATION

(11) **EP 4 318 745 A1**
(43) Date of publication of application: **07.02.2024**
(21) Application number: 22779074.8
(22) Date of filing: 31.03.2022
(51) Int. Cl.: H01M 50/107, H01M 10/0525, H01M 50/536, H01M 50/528

(54) **CYLINDRICAL BATTERY**

(30) Priority: 31.03.2021 CN 202120661907 U
(71) Applicant: Svolt Energy Technology (Wuxi) co., Ltd., Jiangsu 214105 (CN)
(72) Inventor: NING, Yajun, Wuxi, Jiangsu 214105 (CN); XIA, Tianjun, Wuxi, Jiangsu 214105 (CN); YU, Dongpeng, Wuxi, Jiangsu 214105 (CN)
(74) Representative: dompatent von Kreisler Selting Werner - Partnerschaft von Patent- und Rechtsanwälten mbB
(86) International application number: PCT/CN2022/084417
(87) International publication number: WO 2022/206894

(57) **Abstract**

This application relates to the field of lithium-ion battery technology and discloses a cyclic battery, comprising: a housing, comprising a hollow column cavity and a semi enclosed end plate for limiting the axial end of the hollow column cavity, with an opening concentric with the hollow column cavity in the middle position of the semi enclosed end plate; a cell, housed in a hollow column cavity and provided with a positive electrode and a negative electrode near the semi enclosed end plate at both axial ends; a connector component, attachedly connected between the semi enclosed end plate and the negative electrode, and electrically connecting the negative electrode and the housing. Through the technical solution of this application, the positive and negative electrodes of the battery are located on the same side, facilitating the design and welding of the external module busbar.

## Description

This application requires the priority of the Chinese patent application for utility model with the application number 202120661907.8 and the title "a cyclical battery" submitted to the Chinese Patent Office on March 31, 2021, all of which are incorporated by reference in this application.

### Technical Field

This application relates to the field of lithium-ion battery technology, in particular to a cyclic battery.

### Background Technology

With the increasing maturity of lithium-ion battery technology, lithium-ion batteries are widely used as power batteries in the field of electric vehicles. The structural components of lithium-ion batteries are also an important component of lithium-ion power batteries. They not only provide safety and reliability guarantees for lithium-ion batteries, but also take into account the connection between the internal chemical system of lithium-ion batteries and external modules. With the development of the industry, the demand for fast charging and discharging of batteries is becoming increasingly high, as well as the requirements for the overcurrent capacity and safety capacity of lithium batteries. Therefore, the high rate performance of structural components is the trend. However, the positive and negative electrodes of existing lithium-ion batteries are located at opposite ends of the housing, which is not conducive to the design and welding of external module busbars.

### Content of the Utility Model

The purpose of this application is to propose a cyclical battery that can position the positive and negative poles of the battery on the same side, facilitating the design and welding of external module busbars.

To achieve the above purpose, this application provides a cyclical battery, comprising: housing, including a hollow column cavity and a semi enclosed end plate for limiting the axial end of the hollow column cavity, the middle position of the semi enclosed end plate being provided with an opening concentric with the hollow column cavity; a cell, housed in a hollow column cavity and equipped with positive electrodes and negative electrodes near the semi enclosed end plate at both axial ends; a connector component, tightly connected between the semi enclosed end plate and the negative electrode, and being electrically connected between the negative electrode and the housing.

Optionally, the connector component includes first and second connectors that are attached and fixed to each other; the first connector is attached to the negative electrode and fixed to the negative electrode through laser welding; the second connector is attached to the semi enclosed end plate and fixed to the semi enclosed end plate through laser welding.

Optionally, the first connector is a copper nickel plated connector, and the second connector is a nickel plated steel plate.

Optionally, the surface of the second connector far away from the first connector is equipped with a circular convex step, which divides the surface of the first connector into an inner connecting area and an outer connecting area. The outer connecting area is attached to the semi enclosed end plate and makes the step and the inner connecting area close the opening.

Optionally, the negative electrode is equipped with a liquid injection hole; the connector component has a through hole aligned with the injection hole, and the through hole is located in the inner connecting area; the battery also includes a sealing component for sealing the through hole, which is set inside the inner connecting area and adapted to the shape of the inner connecting area.

Optionally, the outer connecting area is attached to the lower surface of the semi enclosed end plate. The sidewall of the step is located on the inner side of the sidewall of the semi enclosed end plate, and the upper surface of the step is flush with the upper surface of the semi enclosed end plate.

Optionally, the sealing component includes a PET patch and a sealing nickel sheet. The PET patch is attached to the through hole of the inner connecting area, and the sealing nickel sheet is attached to the PET patch.

Optionally, the lower surface of the sealing component is attached to the inner connecting area, and the upper surface of the sealing component is flush with the upper surface of the step.

Optionally, the other end of the housing is an open end for cell insertion, and the battery includes a positive electrode cover plate that is fixedly connected to the positive electrode. The positive electrode cover plate covers and closes the open end.

Optionally, the cell is cylindrical, and the housing is wrapped around the cell and adapted to the shape of the cell.

Compared to prior art, the cyclic battery described in this application has the following advantages:
The negative electrode of the cell is fixedly connected to the semi enclosed end plate through a connector component, allowing the negative electrode of the cell to transmit electrical energy to the semi enclosed end plate through the connector component. Furthermore, it causes the housing to form a negative electrode with negative charge, thereby achieving the effect of causing the battery to form a positive electrode and a negative electrode on the same side as the housing at one end of the cell positive electrode. Compared to batteries with positive and negative electrodes located at both ends in the prior art, the cyclic battery of this application is more conducive to the design and connection of external module busbars.

The other features and advantages of this application will be explained in detail in the subsequent embodiment section.

### Description of figures

The drawings forming a part of this application are used to provide a further understanding of the application. The illustrative embodiments and explanations of this application are used to explain the application and do not constitute an improper limitation of the application. In the drawings:
Figure 1 is a schematic diagram of the explosive structure of a battery according to an embodiment of the present application;
Figure 2 is a partial cross-sectional structural diagram of a battery according to an embodiment of the present application.

### Explanation of reference signs:

| | | | |
|---|---|---|---|
| 1 | cylindrical battery | | |
| 11 | cell | 12 | housing |
| 13 | connector component | 14 | sealing component |
| 15 | positive electrode cover plate | | |
| 111 | through hole | | |
| 121 | semi enclosed end plate | 122 | open end |
| 131 | first connector | 132 | second connector |
| 1321 | step | 1322 | inner connecting area |
| 1323 | outer connecting area | | |
| 141 | PET patch | 142 | sealing nickel sheet |

### Embodiments

It should be noted that in the absence of conflicts, the embodiments and the features in the embodiments in this application can be combined with each other.

The directions or positional relationships indicated by "length", "width", "up", "bottom", "front", "back", "left", "right", "top", "bottom", "inside", "outside", etc. in the implementation method of this application are based on the directions or positional relationships shown in the drawings. They are just for the convenience of describing this application and simplifying the description, rather than indicating or implying that the device or component referred to must have a specific orientation, be constructed and operated in a specific orientation, and therefore shall not be understood as a limitation on the present application.

In addition, the terms "installation", "connection", "attachment", "fixation" and other terms should be broadly understood, for example, they can be fixed connections, detachable connections, or integrated; it can be mechanical connection, electrical connection, or communication with each other; it can be directly connected or indirectly connected through an intermediate medium, which can be the internal connection between two components or the interaction relationship between two components, unless otherwise specified. For ordinary technical personnel in this field, the specific meanings of the above terms in this application can be understood based on specific circumstances.

The present application will be explained in detail below with reference to the drawings and in conjunction with the implementation methods.

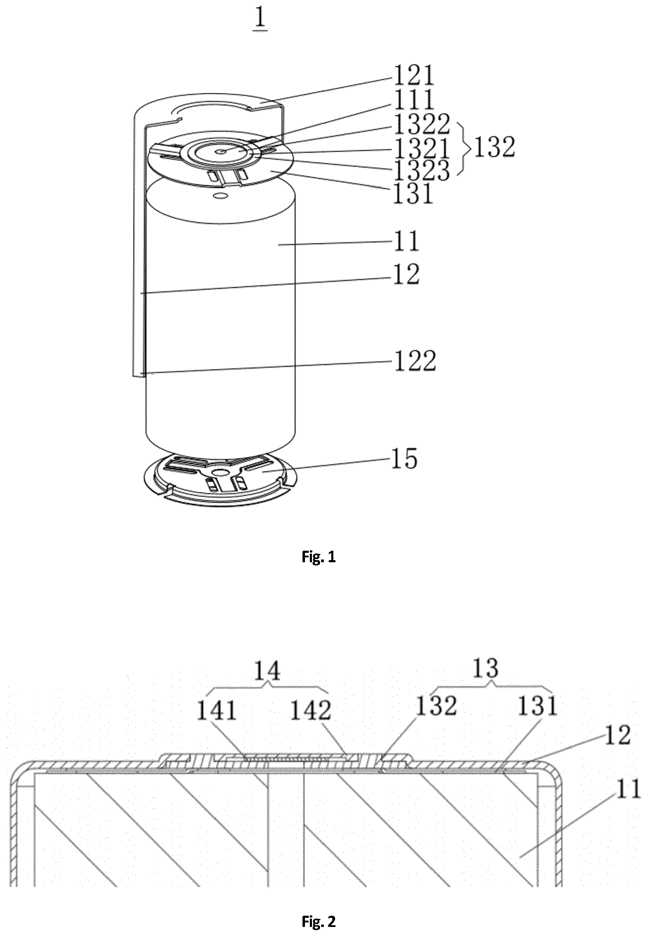

Figure 1 is a schematic diagram of the explosive structure of a cyclic battery according to an embodiment of the present application. Figure 2 is a schematic diagram of the local semi sectional structure of a cyclic battery according to an embodiment of the present application. As shown in Figures 1 to 2, in the embodiment of the present application, a cyclic battery 1 is provided, comprising: housing 12, comprising a hollow column cavity and a semi enclosed end plate 121 for limiting the axial end of the hollow column cavity, with an opening concentric with the hollow column cavity in the middle position of the semi enclosed end plate 121; a cell 11, housed in a hollow column cavity and equipped with a positive electrode and a negative electrode near semi enclosed end plate 121 at both axial ends; a connector component 13, tightly connected between the semi enclosed end plate 121 and the negative electrode, and electrically connected to the negative electrode and housing 12.

By setting the housing 12 as a hollow column cavity and a semi enclosed end plate 121 form for limiting the axial end of the hollow, the cell 11 can be accommodated in the hollow column cavity. Place the negative electrode of cell 11 at one end near the semi enclosed end plate 121 and fit and connect it between the semi enclosed end plate 121 and the negative electrode through the connector component 13, so as to transfer electrical energy from the negative electrode to the semi enclosed end plate 121 through the connector component 13, thereby making the housing 12 form a negative electrode with negative charge. Due to the fact that the positive electrode of cell 11 is facing the other side of housing 12, and housing 12 itself can be seen as the negative electrode, the positive and negative electrodes of cyclical battery 1 can be considered to be on the same side, when it is necessary to connect the external module busbar to the battery, the positive electrode of the external module busbar can be connected to the positive electrode of cell 11 on the same side of the battery, and the negative electrode of the external module busbar can be connected to the housing 12. Compared to batteries with positive and negative electrodes located at both ends in the prior art, the cyclic battery 1 of this application is more conducive to the design and connection of external module busbars.

It can be understood that the semi enclosed end plate 121 is formed by bending one end of the housing 12 axis towards the direction of the hollow column cavity, and forms an opening concentric with the hollow column cavity in the middle of the semi enclosed end plate 121. This makes the end of housing 12 corresponding to semi enclosed end plate 121 demonstrate a semi enclosed state, thereby achieving axial limit of cell 11 under the action of semi enclosed end plate 121. The end of housing 12 away from semi enclosed end plate 121 is open end 122, in order to facilitate cell 11 from open end 122. The battery includes a positive electrode cover plate 15 that is fixedly connected to the positive electrode. The positive electrode cover plate 15 covers and closes the open end 122, thereby preventing dust and debris from entering the housing 12. In the embodiment of the present application, the surface of the positive electrode cover plate 15 far from the cell 11 is provided with a conductive sheet electrically connected to the positive electrode of the cell 11, in order to facilitate the connection between the positive electrode of the external module busbar and the conductive sheet. The external module busbar can be connected to the battery through resistance welding, laser welding, and other methods.

In the embodiment of this application, cell 11 is cylindrical, and housing 12 is wrapped around cell 11 and adapted to its shape. Thus, the overall structure of the battery is cylindrical, which facilitates the subsequent use of cylindrical battery 1, as well as the design and connection of devices related to cylindrical battery 1.

In the embodiment of the present application, the connector component 13 includes a first connector 131 and a second connector 132 that are attached and fixedly connected to each other. The first connector 131 is attached to the negative electrode and fixed to the negative electrode through laser welding; the second connector 132 is attached to the semi enclosed end plate 121 and fixed to the semi enclosed end plate 121 by laser welding.

By attaching the first connector 131 to the negative electrode and fixing the first connector 131 with the negative electrode through laser welding, a laser solder joint is formed between the first connector 131 and the negative electrode for conductivity, forming an electrical connection between the negative electrode and the first connector 131 through the laser solder joint. By attaching the second connector 132 to the semi enclosed end plate 121 and fixing the second connector 132 with the housing 12 through laser welding, a laser solder joint is formed between the second connector 132 and the housing 12 for conducting electricity. Due to the fact that the first connector 131 and second connector 132 are bonded and fixedly connected to each other, the current from the negative electrode of cell 11 can be transmitted to the first connector 131 through the laser soldering point between the first connector 131 and the negative electrode. Then, the current is transferred from the first connector 131 to the second connector 132, and finally through the laser solder joint between the second connector 132 and the semi enclosed end plate 121 to the housing 12, causing the housing 12 to form a negative electrode with negative charge.

In the embodiment of this application, the first connector 131 and second connector 132 are fixedly connected through laser welding, wherein the first connector 131 is a copper nickel plated connection piece, and second connector 132 is a nickel plated steel plate. This design can improve the transfer speed and stability of current from cell 11 to housing 12.

In the embodiment of the present application, the surface of the second connector 132 far from the first connector 131 is provided with a ring-shaped protrusion step 1321, which divides the surface of the first connector 131 into inner connecting area 1322 and outer connecting area 1323. Attach outer connecting area 1323 to semi enclosed end plate 121 and make the opening with step 1321 and inner connecting area 1322 close the opening.

By dividing the surface of the second connector 132 into inner connecting area 1322 and outer connecting area 1323 through step 1321, the outer connecting area 1323 can be bonded to the semi enclosed end plate 121, and the opening on semi enclosed end plate 121 is closed by step 1321 and inner connecting area 1322. Fully seal one end of the semi enclosed end plate 121 corresponding to housing 12, thereby preventing dust and debris from entering the housing 12. At the same time, it can also facilitate laser welding of the position where the semi enclosed end plate 121 and outer connecting area 1323 are attached, forming electrical continuity between the second connector 132 and housing 12. Furthermore, the positive and negative electrodes of the battery are located on the same side, facilitating the design and connection of external module busbars.

In the embodiment of this application, the outer connecting area 1323 is attached to the lower surface of the semi enclosed end plate 121, the side wall of step 1321 is located on the inner side of the side wall of the semi enclosed end plate 121, and the upper surface of step 1321 is flush with the upper surface of the semi enclosed end plate 121.

By attaching the outer connecting area 1323 to the lower surface of the semi enclosed end plate 121 and attaching the side wall of step 1321 to the side wall of the semi enclosed end, the second connector 132 can form a limit in the horizontal and vertical directions of the housing 12, preventing the second connector 132 from shaking relative to the housing 12. At the same time, it can also improve the sealing degree of second connector 132 to semi enclosed end plate 121. Set the upper surface of step 1321 to be flush with the upper surface of semi enclosed end plate 121 to avoid step 1321 protruding from the surface of housing 12 and affecting the design and welding of the external module busbar, thereby improving the overall aesthetics of the battery.

In the embodiment of the present application, the negative electrode is provided with a liquid injection hole, the connector component 13 is provided with a through hole 111 aligned with the liquid injection hole, and the through hole 111 is located in the inner connecting area 1322; the battery also includes a sealing component 14 for sealing through hole 111, which is located inside the inner connecting area 1322 and adapted to the shape of the inner connecting area 1322.

By opening a liquid injection hole in the negative electrode, electrolyte can be injected into the interior of cell 11 through the injection hole, thereby playing a role in decomposing electrons through the electrolyte. By opening a through hole 111 on the connector component 13 that is aligned with the injection hole and locating the through hole 111 in the inner connecting area 1322, it is possible to avoid sealing the injection hole after the connector component 13 is welded to the negative electrode of cell 11, resulting in the inability to inject electrolyte into cell 11 through the injection hole. After welding and fixing the connector component 13 to the negative electrode of cell 11 and semi enclosed end plate 121, electrolyte is injected through the injection hole. Finally, the sealing component 14 is fixed to the inner connecting area 1322, thereby sealing the injection hole through the sealing component 14 to prevent electrolyte leakage. The shape of sealing component 14 is adapted to the inner connecting area 1322, which can improve the sealing effect of sealing component 14 on the injection hole.

In the embodiment of this application, sealing component 14 includes PET patch 141 and sealing nickel sheet 142. PET patch 141 is attached to the through hole 111 of the inner connecting area 1322, and sealing nickel sheet 142 is attached to PET patch 141.

By attaching PET patch 141 to the through hole 111 of the inner connecting area 1322, the PET patch 141 seals the through hole 111, so as to prevent electrolyte leakage. Attach the sealing nickel sheet 142 to the PET patch 141 to facilitate the fixed connection between the sealing nickel sheet 142 and the inner connecting area 1322 through laser welding. That is, the sealing nickel sheet 142 is fixedly connected to the second connector 132 to further prevent electrolyte leakage.

In the embodiment of this application, the lower surface of the sealing component 14 is adhered to the inner connecting area 1322, and the upper surface of the sealing component 14 is flush with the upper surface of step 1321. The lower surface of sealing component 14 is attached to the inner connecting area 1322. That is, PET patch 141 and sealing nickel sheet 142 are simultaneously attached to the inner connecting area 1322 to improve the sealing degree of sealing component 14 on the injection hole. The upper surface of sealing component 14 is configured to be flush with the upper surface of step 1321. That is, the upper surface of the sealing nickel sheet 142 is configured to be flush with the upper surface of the housing 12 to avoid the protruding of the sealing component 14 from the surface of the housing 12 and affecting the design and welding of the external module busbar, thereby improving the overall aesthetics of the battery.

It can be understood that the size of PET patch 141 is smaller than the size of sealing nickel sheet 142, and the size of sealing nickel sheet 142 matches the size of inner connecting area 1322. Therefore, after attaching PET patch 141 to the inner connecting area 1322, PET patch 141 does not fully cover the inner connecting area 1322. It can be attached to the uncovered inner connecting area 1322 of PET patch 141 through sealing nickel sheet 142.

The above is only a preferred implementation of this application and is not intended to limit it. Any modifications, equivalent replacements, improvements, etc. made within the spirit and principles of this application shall be included in the scope of protection of this application.

## Claims

1. A cyclical battery, **characterized in** comprising:
a housing (12), comprising a hollow cylindrical cavity and a semi enclosed end plate (121) for limiting the axial end of the hollow cylindrical cavity, the middle position of the semi enclosed end plate (121) being provided with an opening concentric with the hollow column cavity;
a cell (11), accommodated in the hollow column cavity and is provided with a positive electrode and a negative electrode near the semi enclosed end plate (121) at both axial ends;
a connector component (13), attached and connected between the semi enclosed end plate (121) and the negative electrode, and electrically connected the negative electrode and the housing (12).

2. The cyclic battery according to claim 1, **characterized in**: the connector component (13) includes a first connector (131) and a second connector (132) that are attached and fixed to each other, and the first connector (131) is attached to the negative electrode and fixed to the negative electrode through laser welding; the second connector (132) being attached to the semi enclosed end plate (121) and fixed to the semi enclosed end plate (121) through laser welding.

3. The cyclic battery according to claim 2, **characterized in**: the first connector (131) being a copper nickel plated connecting piece, and the second connector (132) being a nickel plated steel plate.

4. The cyclic battery according to claim 2, **characterized in**: the surface of the second connector (132) far from the first connector (131) being provided with a ring-shaped raised step (1321), the step (1321) dividing the surface of the first connector (131) into inner connecting area (1322) and outer connecting area (1323), the outer connecting area (1323) being attached to the semi enclosed end plate (121) and making the step (1321) and the inner connecting area (1322) are close the opening.

5. The cyclic battery according to claim 4, **characterized in**: the negative electrode being provided with a liquid injection hole, the connector component (13) being provided with a through hole (111) aligned with the injection hole, and the through hole (111) being located in the inner connecting area (1322); the cyclic battery also includes a sealing component (14) for sealing the through hole (111), the sealing component being configured within the inner connecting area (1322) and adapted to the shape of the inner connecting area (1322).

6. The cyclic battery according to claim 4, **characterized in**: the outer connecting area (1323) being adhered to the lower surface of the semi enclosed end plate (121), the sidewall of the step (1321) being located on the inner side of the sidewall of the semi enclosed end plate (121), and the upper surface of the step (1321) being flush with the upper surface of the semi enclosed end plate (121).

7. The cyclic battery according to claim 5, **characterized in**: the sealing component (14) comprising a PET patch (141) and a sealing nickel sheet (142), the PET patch (141) being attached to the through hole (111) of the inner connecting area (1322), and the sealing nickel sheet (142) being attached to the PET patch (141).

8. The cyclic battery according to claim 5, **characterized in**: the lower surface of the sealing component (14) being adhered to the inner connecting area (1322), and the upper surface of the sealing component (14) being flush with the upper surface of the step (1321).

9. The cyclic battery according to claim 1, **characterized in**: the other end of the housing (12) being an open end (122) for the insertion of the cell (11), the cyclic battery comprising a positive electrode cover plate (15) fixedly connected to the positive electrode, and the positive electrode cover plate (15) covering and closing the open end (122).

10. The cyclic battery according to any one of claims 1-9, **characterized in**: the cell 3 (11) being cylindrical, and the housing (12) being wrapped around the cell (11) and adapted to its shape.
